# EUROPÄISCHE PATENTANMELDUNG

(11) **EP 3 716 426 A1**
(43) Veröffentlichungstag der Anmeldung: **30.09.2020**
(21) Anmeldenummer: 19165250.2
(22) Anmeldetag: 26.03.2019
(51) Int. Cl.: H02G 3/08, H02B 1/52, H02G 3/18

(54) **MESSGERÄTEZUGRIFF AN MOBILER BOX**

(71) Anmelder: INDU-Electric Gerber GmbH, 41470 Neuss (DE)
(72) Erfinder: Dicken, Ralf, 41470 Neuss (DE); Strauss, August, 41470 Neuss (DE); Gockel, Dominik, 41470 Neuss (DE)
(74) Vertreter: Lenzing Gerber Stute

(57) **Zusammenfassung**

Die Erfindung betrifft ein Gehäuse mit mindestens einem durch das Innere des Gehäuses zwischen einem ersten Anschluss als Stromzugang und einem oder mehreren zweiten Anschlüssen als Stromabgänge geführten elektrischen Leiter, insbesondere ein mobiles Stromverteilergehäuse. Um eine einfache Fehlerprüfung zu ermöglichen, wird vorgeschlagen, eine Leiterführung an bzw. in einer Wandung des Gehäuses vorzusehen, durch die der Leiter derart geführt ist, dass lediglich der genau eine Leiter mit einem von außerhalb des Gehäuses zugreifenden Messgerät umgriffen werden kann. Die Erfindung betrifft auch ein System mehrerer in einer Kaskade elektrisch verbundener Gehäuse.

## Beschreibung

Die vorliegende Erfindung betrifft ein Gehäuse mit mindestens einem durch das Innere des Gehäuses zwischen einem ersten Anschluss als Stromzugang und einem zweiten Anschluss als Stromabgang geführten elektrischen Leiter, insbesondere mobiles Stromverteilergehäuse. Die Erfindung betrifft auch ein System mehrerer solcher, in einer Kaskade elektrisch verbundener Gehäuse.

Mobile Stromverteiler sind hinlänglich bekannt. Sie werden insbesondere zum Verteilen von Strom für temporär an einem Ort benötigte Verbraucher eingesetzt. Ein Verwendungsbereich mobiler Stromverteiler sind beispielsweise Großveranstaltungen, bei denen die Lichttechnik von Bühnen und die Beschallungstechnik temporär eingerichtet wird und mit Strom versorgt werden muss. Auch auf Baustellen werden regelmäßig mobile Stromverteiler eingesetzt. Üblicherweise werden zur Stromversorgung kaskadierte Stromverteilersysteme mit einem Hauptverteiler und mehreren daran angeschlossenen Unterverteilern eingesetzt, an die weitere Unterverteiler in verschiedenen Kaskaden angeschlossen sein können.

Üblicherweise haben solche mobilen Stromverteiler ein äußerst robustes Gehäuse aus einem stabilen Wandmaterial, mindestens einen Stromzugang, häufig in Form einer CEE-Kabelzuleitung, mindestens auf einer Gehäuseaußenseite Steckdosen, beispielsweise CEE-Steckdosen, die mit dem mindestens einen Stromzugang über einen Verteiler im Inneren des Gehäuses, beispielsweise eine Sammelschiene oder Verdrahtung, verbunden sind, wahlweise gummierte Ecken oder Kanten, Stapelbeschläge, etc., um selbst bei hoher mechanischer Belastung langlebig und effizient einsetzbar zu sein. Mobile Stromverteiler gibt es beispielsweise in Form von sogenannten Flightcases, also aufklappbaren, meist hochkant aufzustellenden Boxen, in deren Innenseite die Stromanschlüsse angeordnet sind, von stapelbaren Boxen, die zu einem Turm aufeinander gestapelt werden können, in 19 Zoll-Ausführung, um in 19-Zoll-Schränken montiert werden zu können, oder in Form von Koffern oder als einzeln stehende Boxen.

Ein Problem bei kaskadierten Stromverteilersystemen mit einer Vielzahl von daran angeschlossenen Lasten besteht dann, wenn die Lasten Fehlerströme erzeugen, was heutzutage recht häufig vorkommt, ohne dass tatsächlich ein Fehler vorliegt. Fehlerströme verschiedener angeschlossener Lasten können sich aufsummieren und insbesondere an übergeordneten Verteilern so hoch sein, dass der Fehlerstrom Schwellwerte, in denen eine Fehlerstromeinrichtung, insbesondere ein Fehlerstromschutzschalter, auslöst, zuweilen deutlich übersteigt. Wird eine Fehlerstromeinrichtung an einem übergeordneten Verteiler ausgelöst, kann so ein gesamter Bereich der Stromversorgung ausfallen, ohne dass tatsächlich ein Fehler vorliegt.

Dem lässt sich begegnen, indem beispielsweise zulässige Fehlerströme durch Fehlerstromeinrichtungen an jedem der eingesetzten Stromverteiler begrenzt werden. Jeden Stromverteiler abzusichern, ist allerdings äußerst aufwändig und teuer.

Somit liegt der vorliegenden Erfindung die Aufgabe, eine Verteilerbox bereitzustellen, die einen effizienteren Umgang mit Fehlerströmen ermöglicht.

Diese Aufgabe wird bei einer Verteilerbox der eingangsgenannten Art gemäß Anspruch 1 gelöst durch eine Leiterführung an bzw. in einer Wandung des Gehäuses, durch die der Leiter derart geführt ist, dass lediglich der genau eine Leiter mit einem von außerhalb des Gehäuses zugreifenden Messgerät umgriffen werden kann.

Eine Leiterführung im Sinne der vorliegenden Erfindung ist ein Mittel, um einen Leiter in einen Bereich zum Zugriff des Messgerätes von außerhalb des Gehäuses zu führen und von dort wieder hinaus zu führen und/oder einen Leiter durch den Bereich zum Zugriff des Messgerätes von außerhalb des Gehäuses hindurch zu führen.

Dadurch, dass von außen auf einen durch das Gehäuse geführten Leiter mit einem Messgerät zugegriffen werden kann, ist es möglich, am Gehäuse festzustellen, wie hoch der über den Leiter geführte Strom. Gemessen kann dies beispielsweise mit einer Strommesszange oder mit einem Zangenmultimeter. Ströme, die bestimmt werden können, sind insbesondere Fehlerströme, Ableitströme, Differenzströme und diverse Betriebsströme auf Phasenleitern und Neutralleitern.

Somit wird es beispielsweise in einem kaskadierten Stromverteilersystem, in dem an übergeordneten Stromverteilern ein vergleichsweise hoher Fehlerstrom festgestellt wird, möglich, an jedem einzelnen Punkt in der Stromverteilerkaskade festzustellen, welche Fehlerströme auftreten, so dass eine gezielte Fehlersuche mit vergleichsweise geringem Aufwand erfolgen und schnell zu einem Ergebnis geführt werden kann. Beruht der an einem Stromverbraucher entstehende Fehlerstrom auf einem elektrischen Fehler, kann der Fehler dann am Verbraucher behoben oder der Verbraucher vom Stromverteilungsnetz entkoppelt werden. Wird der Fehlerstrom, der an einem oder mehreren Verbrauchern entsteht, als tolerierbar eingestuft, kann der Grenzwert, ab dem beispielsweise eine das Stromverteilernetz oder Teile davon absichernder Fehlerstrom-Schutzeinrichtung auslöst, angepasst und insbesondere angehoben werden.

Ein anderer ganz wesentlicher Vorteil der vorliegenden Erfindung besteht darin, dass die durch einen Leiter fließenden Ströme während des Betriebs gemessen werden können, ohne dass das Gehäuse geöffnet werden muss. Hinzu kommt, dass durch eine Messstelle an der Außenseite der Außenseite des Gehäuses die Zugänglichkeit der Messstelle deutlich verbessert ist. Im Ergebnis wird die Gefahr eines Stromschlags für den Messenden auf ein Minimum reduziert.

Hierdurch wird die Einrichtung eines mobilen Stromverteilernetzes ganz erheblich vereinfacht.

In einer bevorzugten Ausgestaltung der Erfindung ist mindestens einer der von außerhalb des Gehäuses mit einem Messgerät umgreifbaren Leiter ein PE-Leiter oder ein PEN-Leiter. Da Fehlerströme über einen PE-Leiter bzw. einen PEN-Leiter abgeführt werden, kann über eine Strommessung an diesen Leitern ein Fehlerstrom und seine Höhe am einfachsten festgestellt werden. Der Leiter muss in dem Bereich des Zugriffs für das Messgerät zwangsläufig von anderen Leitern einer Stromleitung getrennt geführt sein.

In einer anderen oder ergänzenden Ausgestaltung der Erfindung ist mindestens einer der von außerhalb des Gehäuses mit einem Messgerät umgreifbaren Leiter ein Phasenleiter und/oder ein Neutralleiter. Auch durch eine Messung des Stroms und seines Verlaufs an Phasen- und/oder Neutralleitern kann die Qualität des Stromverteilernetzes am Messpunkt bestimmt werden.

In einer weiteren bevorzugten Ausgestaltung der Erfindung sind zwei, drei, oder mehr von außerhalb des Gehäuses mit einem Messgerät umgreifbare Leiter vorgesehen, um beispielsweise eine Mehrzahl von Messwerten zur Qualität des Stromverteilernetzwerkes und/oder der Höhe eines Stroms am Stromzu- und/oder - abgang des Gehäuses abgreifen zu können.

Zur einfachen Verkabelung des Gehäuses ist in dem Bereich, in dem der Leiter von außen mit einem Messgerät umgreifbar sein soll, in einer bevorzugten Ausführungsform der Erfindung ein Kabelkanal vorgesehen, durch den der einzelne Leiter getrennt von anderen Leitern hindurchgeführt wird.

Um einen Zugriff von außen auf einen Leiter zu ermöglichen, kann das Gehäuse eine vorstehende Wandung aufweisen, in der mindestens eine Öffnung vorgesehen ist und der Leiter innerhalb der Wandung zwischen dem Rand der Wandung und der Öffnung geführt ist, so dass man mit einer Stromzange vom Rand der Wandung her in die Öffnung eingreifen und den einzelnen Leiter umgreifen kann. Im Prinzip kommt es auf die Form der Öffnung nicht an. Kreisrunde oder ovale Öffnungen sind insoweit bevorzugt, als ein Messwerkzeug darin nicht verkanten kann. Als Leiterführung ist in der Wandung vorzugsweise ein integrierter Kanal vorgesehen. Wenn mehrere Öffnungen in der vorstehenden Wandung nebeneinander angeordnet sind, wird jeweils ein Leiter um jeweils eine Öffnung in Form einer Schlaufe herumgeführt, so dass zwischen Rand und Öffnung jeweils nur genau ein Leiter verläuft.

Alternativ oder in Ergänzung hierzu kann das Gehäuse mindestens ein vollständig umgreifbares Griffstück aufweisen, das als Leiterführung mit einem dadurch hindurch laufenden Kanal ausgebildet oder durch das ein Kabelkanal als Leiterführung hindurchgeführt ist, so dass ein Leiter durch das Griffstück hindurchgeführt werden und als Messstelle verwendet werden kann. Hierdurch kann der Gehäuseaufbau vereinfacht werden.

Eine weitere Alternative oder Ergänzung hierzu besteht darin, dass mindestens eine der Wandungen eine Vertiefung oder eine Ausnehmung aufweist, und dass mindestens ein Leiter durch den lichten Bereich der Vertiefung oder die Ausnehmung geführt ist. Der Leiter kann, sofern er ausreichend isoliert ist, frei durch den lichten Bereich der Vertiefung oder der Ausnehmung ohne zusätzliche Ummantelung verlaufen. In diesem Fall sind die Öffnungen im Gehäuse, aus denen der Leiter in den lichten Bereich eintritt und aus dem lichten Bereich in das Gehäuse zurück austritt, die Leiterführung. Als Leiterführung kann aber alternativ oder in Ergänzung hierzu beispielsweise auch ein Kabelkanal als (zusätzliche) Leiterführung vorgesehen sein. Durch eine derartige Vertiefung oder Ausnehmung können ein oder mehrere in einem Abstand zueinander angeordnete Leiter geführt sein, auf die einzeln von außen mit einem Messgerät zugegriffen werden kann. Eine derartige Ausnehmung kann in einem zentralen Bereich einer Gehäusewandung vorgesehen sein, aber beispielsweise auch am Rand einer Wandung, die ggf. auch über den Gehäusekörper überstehen kann. Die Vertiefung oder Ausnehmung kann zum Rand des Gehäuses hin auch offen sein, insbesondere dann, wenn der bzw. die Leiter, auf die zugegriffen werden soll, parallel zum Rand verlaufen.

In einer weiteren vorteilhaften Ausgestaltung der Erfindung ist das Gehäuse durch eine Mulde in der Gehäusewand mit zwei Öffnungen gekennzeichnet, durch die ein Leiter aus dem Gehäuse heraus und wieder in das Gehäuse hineingeführt ist, wobei ein Abschnitt des Leiters als Schlaufe aus dem Gehäuse herausgezogen und wieder hineingedrückt werden kann, wobei die Öffnungen hier als Leiterführung dienen. Dabei ist an der Schlaufe des Leiters vorzugsweise ein Griffstück befestigt, das an die Form der Mulde angepasst ist und als Handhabe für den Leiter dient. Ist der Leiter weitestgehend in das Gehäuse hineingedrückt, kann das Griffstück die Mulde abdecken, so dass der Leiter gegen eine Beschädigung von außen geschützt ist.

Vorzugsweise ist an der Außenseite des Gehäuses in dem Bereich, in dem ein Leiter mit einem von außerhalb des Gehäuses zugreifenden Messgerät umgriffen werden kann, eine Kennung oder Beschriftung zur Kennzeichnung der Art des Leiters vorgesehen.

Wie sich aus dem Vorstehenden ergibt, ist die Erfindung insbesondere für mobile Gehäuse geeignet. Die Erfindung kann aber auch für festinstallierte stromführende Gehäuse, beispielsweise für Wandverteiler, sinnvoll sein.

Das erfindungsgemäße Gehäuse kann in einer einfachen Ausführungsform genau einen Stromzugang und genau einen Stromabgang haben. Ein solches Gehäuse kann dann beispielsweise vor einen Stromverteiler vorgeschaltet oder an einen Stromabgang eines Stromverteilers angeschlossen sein, so dass über das derart ausgestaltete Gehäuse Messungen von Strömen durch einzelne Leiter am Stromzugang oder Abgang des Stromverteilers durchgeführt werden können.

Wie sich aus dem Vorstehenden bereits ergibt, ist das erfindungsgemäße Gehäuse besonders für mobile Stromverteiler mit mindestens einem Stromzugang und mindestens zwei Stromabgängen geeignet, wobei die Stromabgänge beispielsweise als Steckdosen, Klemmenabgang oder Steckverbinder ausgebildet sein können, die elektrisch mit dem Stromzugang verbunden sind. Bei einem solchen mobilen Stromverteiler können die Stromabgänge vorzugsweise auf einer Seite des Gehäuses angeordnet sein. Die Seite mit den Stromabgängen kann von den daran angrenzenden Wandungen des Gehäuses überragt werden, wobei eine oder mehrere Öffnungen bzw. Ausnehmungen im die Seite überragenden Teil einer oder mehrerer Wandungen vorgesehen sein können. Der oder die Leiter, die von außen für ein Messgerät zugreifbar sein sollen, können dann zwischen der bzw. den Öffnungen und dem bzw. den Rändern des überragenden Teils der Wandungen oder durch die eine oder mehreren Ausnehmungen geführt sein.

Wenn der Strom durch einen Leiter eines Stromabgangs eines Stromverteilers messbar sein soll, ist es sinnvoll, dass der von außen zugreifbare Leiter mit dem Stromabgang verbunden ist, also elektrisch zwischen einer im Gehäuse angeordneten Stromverteilung und dem Stromabgang liegt. Natürlich kann der von außen zugreifbare Leiter auch elektrisch zwischen dem Stromzugang und der innerhalb des Gehäuses angeordneten Stromverteilung liegen, wenn beispielsweise bestimmbar sein soll, wie hoch der gesamte vom Stromverteiler aufgenommene und in das Netz eingeleitete Fehlerstrom ist.

Werden die erfindungsgemäßen Gehäuse in einer Kaskade elektrisch miteinander verbunden, entsteht hierdurch ein stabiles Stromverteilersystem, dass besonders zeiteffizient und kostengünstig eingerichtet werden kann.

Im Folgenden wird die Erfindung anhand von Figuren, in denen bevorzugte Ausführungsbeispiele der Erfindung dargestellt sind, näher erläutert.

Es zeigen
- Fig. 1: eine Außenansicht eines erfindungsgemäßen Gehäuses eines Stromverteilers in einer ersten Ausführungsform;
- Fig. 2: eine Schnittansicht durch einen Teil des in Fig. 1 dargestellten Gehäuses;
- Fig. 3: eine vereinfachte Schaltskizze zu einer möglichen Ausführungsform eines erfindungsgemäßen Stromverteilers;
- Fig. 4: eine Außenansicht eines erfindungsgemäßen Gehäuses in einer zweiten Ausführungsform; und
- Fig. 5: eine Außenansicht eines erfindungsgemäßen Gehäuses in einer dritten Ausführungsform.

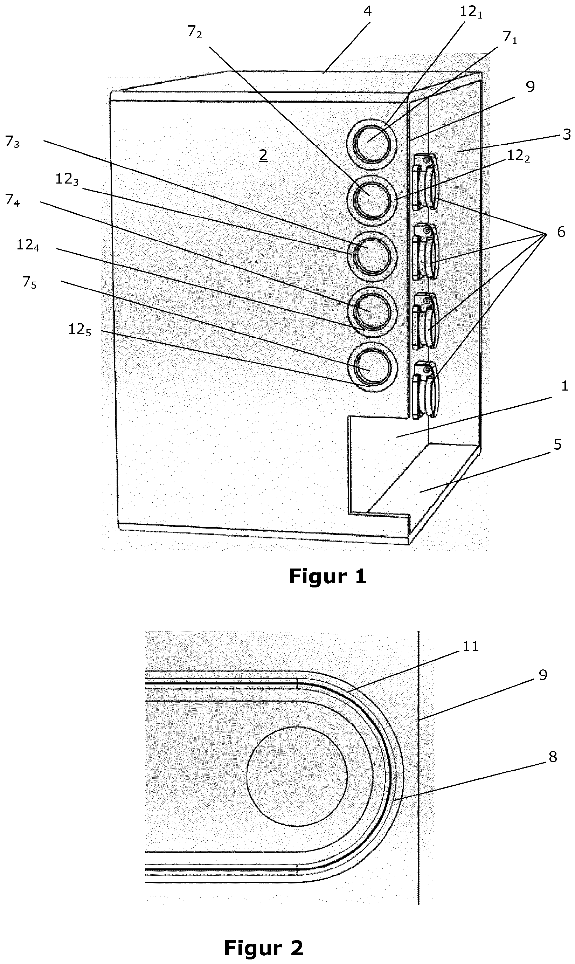

Figur 1 zeigt einen Stromverteiler mit einem Gehäuse mit einer frontseitigen Wandung 1, zwei seitlichen Wandungen 2, 3, einer oberen Wandung 4 sowie einer unteren Wandung 5 und einer nicht dargestellten rückseitigen Wandung. Die Frontseite 1 weist mehrere CEE-Steckdosen 6 als Stromabgänge auf, die über eine Stromverteilung im Inneren des Gehäuses elektrisch mit einem Stromzugang verbunden sind. Stromzugang und Stromverteilung sind nicht dargestellt. Die beiden seitlichen Wandungen 2, 3, die obere Wandung 4 und die untere Wandung 5 ragen nach vorn über die frontseitige Wandung hinaus und bieten somit einen seitlichen Schutz für die Steckdosen 6. Im die Frontseite überragenden Teil der seitlichen Wandung 2 sind fünf übereinander angeordnete, kreisrunde Öffnungen 7₁, 7₂, 7₃, 7₄, 7₅, vorgesehen. Innerhalb der Wandung 2 ist um jede der Öffnungen 7 ein Kabelkanal 8 schlaufenartig herumgeführt, so dass, wie in Figur 2 dargestellt ist, der Kabelkanal 8 zwischen dem vorderen Rand 9 der seitlichen Wandung 2 und der jeweiligen Öffnung 7 verläuft. Durch den Kabelkanal 8 verläuft ein Leiter 11 einer Stromleitung.

Die Größe der Öffnungen und ihr Abstand zum vorderen Rand der Seitenwandung ist so bemessen, dass man mit einem Messgerät, beispielsweise einer Strommesszange oder einem Zangenmultimeter, von außen gut in die Öffnung 7 eingreifen und somit den Leiter 11 umschließen kann, um eine Strommessung durchzuführen.

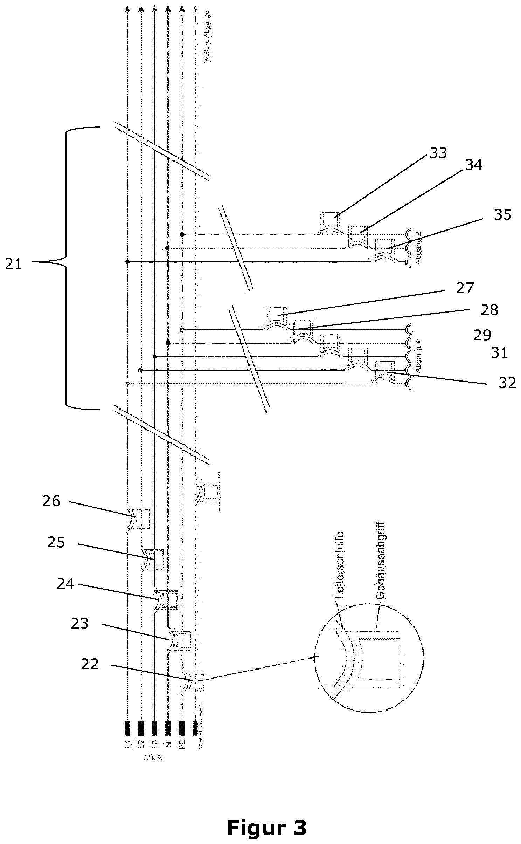

Die seitliche Wandung 2 weist fünf Öffnungen 7 auf, so dass, wie sich der Schaltskizze in Figur 3 entnehmen lässt, für jeden der Leiter einer Drehstromleitung, nämlich einem PE-Leiter, einem Neutralleiter und drei Phasenleitern, die jeweils um eine der Öffnungen 6 herumgeführt sind, eine Zugriffsmöglichkeit für ein Messgerät von außen besteht. Um an jeder Öffnung erkennen zu können, welcher Leiter um sie herumgeführt ist, weist jede Öffnung einen farblichen Kennzeichnungsring 12₁, 12₂, 12₃, 12₄, 12₅, wobei jeder Kennzeichnungsring 12 eine der Art des um die Öffnung herumgeführten Leiters entsprechende Kodierung aufweist.

Bei dem dargestellten Beispiel sind fünf Öffnungen vorgesehen, um die jeweils ein Leiter einer Drehstromleitung schlaufenartig herumgeführt ist, nämlich drei Phasenleiter, ein Neutralleiter und ein PE-Leiter.

Figur 3 zeigt eine Schaltskizze, in der mögliche Kombinationen zum Abgriff von Strömen einzelner Leiter über von außen zugängliche Messstellen dargestellt sind. Bei einer Drehstromleitung mit drei Phasenleitern L1, L2, L3, einem PE-Leiter PE und einem Neutralleiter N ist stromzugangsseitig, also vor einer im Stromverteilergehäuse angeordneten Stromverteilung 21, jeder Leiter einzeln durch einen von außen zugänglichen Messbereich 22, 23, 24, 25, 26 wie beispielsweise eine Öffnung, Ausnehmung oder den lichten Bereich einer Vertiefung in einer Gehäusewand geführt, so dass an jedem Leiter der darin fließende Strom gemessen werden kann.

Im Bereich der Stromverteilung 21, beispielsweise in Form einer Sammelschiene, sind ein erster Stromabgang (Abgang 1) und ein zweiter Stromabgang (Abgang 2) vorgesehen. Der erste Stromabgang weist ebenso drei Phasenleiter, einen Neutralleiter und einen PE-Leiter auf, die ebenso jeweils durch einen von außen zugänglichen Messbereich 27, 28, 29, 31, 32 geführt sind. Der zweite Stromabgang weist lediglich einen Phasenleiter sowie einen Neutralleiter und einen PE-Leiter auf, die jeweils durch die von außen zugänglichen Messbereiche 33, 34, 35 geführt sind. Auch wenn hier jeweils alle Leiter eines Abgangs bzw. alle stromzugangsseitige Leiter durch jeweils einen von außen zugänglichen Messbereich geführt sind, reicht es im Prinzip, wenn lediglich ein Leiter der Stromleitung für eine Strommessung, beispielsweise der PE-Leiter, von außen für die Strommessung zugänglich ist.

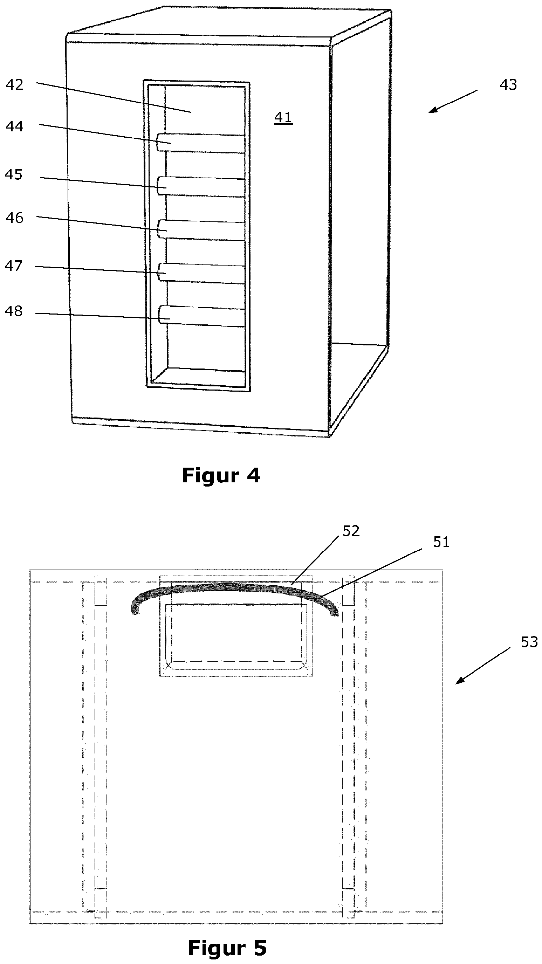

In Figur 4 ist eine andere Alternative eines Messbereichs dargestellt. In der Seitenwandung 41 eines erfindungsgemäßen Stromverteilergehäuses 42 ist eine rechteckige Vertiefung 43 eingelassen. Durch den lichten Bereich der Vertiefung 43 sind parallel und beabstandet zueinander fünf von außen umgreifbare Kabelkanäle 44, 45, 46, 47, 48 geführt. Durch jeden der Kabelkanäle verläuft jeweils einer der fünf Leiter einer Drehstromleitung.

In der in Figur 5 schematisch dargestellten erfindungsgemäßen Ausführungsvariante ist gezeigt, wie ein Leiter 51 durch ein als Kabelkanal ausgebildetes Griffstück 52 eines Stromverteilergehäuses 53 hindurchgeführt ist.

## Patentansprüche

1. Gehäuse mit mindestens einem durch das Innere des Gehäuses zwischen einem ersten Anschluss als Stromzugang und einem oder mehreren zweiten Anschlüssen als Stromabgänge geführten elektrischen Leiter (L1, L2, L3, N, PE), insbesondere mobiles Stromverteilergehäuse, **gekennzeichnet durch** eine Leiterführung an bzw. in einer Wandung (1, 2, 3, 4, 5) des Gehäuses, durch die der Leiter (L1, L2, L3, N, PE) derart geführt ist, dass lediglich der genau eine Leiter (L1, L2, L3, N, PE) mit einem von außerhalb des Gehäuses zugreifenden Messgerät umgriffen werden kann.

2. Gehäuse nach Anspruch 1, **dadurch gekennzeichnet, dass** mindestens einer der von außerhalb des Gehäuses mit einem Messgerät umgreifbaren Leiter ein PE-Leiter (PE) oder ein PEN-Leiter ist, und/oder dass mindestens einer der von außerhalb des Gehäuses mit einem Messgerät umgreifbaren Leiter ein Phasenleiter (L1, L2, L3) oder ein Neutralleiter (N) ist, und/oder dass zwei, drei, oder mehr von mit einem von außerhalb des Gehäuses zugreifenden Messgerät umgreifbare Leiter (L1, L2, L3, N, PE) vorgesehen sind.

3. Gehäuse nach einem der vorstehenden Ansprüche, **dadurch gekennzeichnet, dass** die Leiterführung ein Kabelkanal (11) ist.

4. Gehäuse nach einem der vorstehenden Ansprüche, **dadurch gekennzeichnet, dass** am Rand einer vorstehenden Wandung des Gehäuses mindestens eine Öffnung (7₁, 7₂, 7₃, 7₄, 7₅) vorgesehen ist und der Leiter in der Wandung zwischen dem Rand (9) der Wandung (2) und der Öffnung (7₁, 7₂, 7₃, 7₄, 7₅) geführt ist.

5. Gehäuse nach einem der vorstehenden Ansprüche, **dadurch gekennzeichnet, dass** das Gehäuse mindestens ein vollständig umgreifbares Griffstück (52) aufweist, das als Kabelkanal ausgeführt oder durch das ein Kabelkanal hindurchgeführt ist.

6. Gehäuse nach einem der vorstehenden Ansprüche, **dadurch gekennzeichnet, dass** mindestens eine der Wandungen (41) eine Vertiefung (42) oder eine Ausnehmung aufweist, und dass mindestens ein Leiter durch den lichten Bereich der Vertiefung oder durch die Ausnehmung, insbesondere durch einen Kabelkanal (44, 45, 46, 47, 48), hindurch geführt ist.

7. Gehäuse nach einem der vorstehenden Ansprüche, **gekennzeichnet durch** eine Mulde in einer Wandung des Gehäuses mit zwei Öffnungen, durch die ein Leiter aus dem Gehäuse heraus und wieder in das Gehäuse hineingeführt ist, wobei ein Abschnitt des Leiters als Schlaufe aus dem Gehäuse herausgezogen und wieder hineingedrückt werden kann.

8. Gehäuse nach Anspruch 7, **dadurch gekennzeichnet, dass** an der Schlaufe des Leiters ein Griffstück befestigt ist, das an die Form der Mulde angepasst ist und als Handhabe für den Leiter dient.

9. Gehäuse nach einem der vorstehenden Ansprüche, **dadurch gekennzeichnet, dass** an der Außenseite des Gehäuses in dem Bereich, in dem ein Leiter mit einem von außerhalb des Gehäuses zugreifenden Messgerät umgriffen werden kann, eine Kennung oder Beschriftung zur Kennzeichnung der Art des Leiters vorgesehen ist.

10. Gehäuse nach einem der vorstehenden Ansprüche, **dadurch gekennzeichnet, dass** es ein mobiles Gehäuse ist.

11. Gehäuse nach einem der vorstehenden Ansprüche, **dadurch gekennzeichnet, dass** das Gehäuse genau einen Stromzugang und genau einen Stromabgang hat.

12. Gehäuse nach einem der vorstehenden Ansprüche, **dadurch gekennzeichnet, dass** das Gehäuse ein mobiler Stromverteiler mit mindestens einem Stromzugang und mindestens zwei Stromabgängen, die elektrisch mit dem Stromzugang verbunden sind und insbesondere als Steckdosen (6) ausgebildet sein können.

13. Gehäuse nach dem auf Anspruch 4 oder 6 rückbezogenen Anspruch 12, **dadurch gekennzeichnet, dass** die Stromabgänge auf einer Seite des Gehäuses angeordnet sind und diese Seite von den daran angrenzenden Wandungen des Gehäuses (2, 3, 4, 5) überragt wird, wobei die mindestens eine Öffnung (7₁, 7₂, 7₃, 7₄, 7₅) bzw. Ausnehmung im die Seite überragenden Teil der Wandung vorgesehen ist.

14. Gehäuse nach Anspruch 12 oder 13, **dadurch gekennzeichnet, dass** der mindestens eine Leiter mit einem Stromabgang verbunden ist.

15. System mehrerer in einer Kaskade elektrisch verbundener Gehäuse nach einem der vorstehenden Ansprüche.
